# EUROPEAN PATENT APPLICATION

(11) **EP 4 741 975 A1**
(43) Date of publication of application: **13.05.2026**
(21) Application number: 25213289.9
(22) Date of filing: 04.11.2025
(51) Int. Cl.: G05D 1/246, A01D 34/00, G05D 1/648

(54) **MOWING PATH PLANNING INCLUDING SKIPPED PASSES**

(30) Priority: 07.11.2024 US 202463717580 P; 15.10.2025 US 202519359476
(71) Applicant: Deere & Company, Moline, IL 61265 (US)
(72) Inventor: PROCUNIAR, Steven R, Urbandale (US); LIU, Qiang R, Urbandale (US); PUHALLA, Jeffry S, Moorhead (US); MARRY, Christopher J, Chicago (US); SMITH, Daniel R, Ankeny (US)
(74) Representative: Reddie & Grose LLP

(57) **Abstract**

A mowing vehicle may access a work site representing the field, the work site a data structure comprising polygons representing workable areas and polygons representing unworkable areas. A mowing vehicle may access a set of machine constraints for the autonomous mowing machine. A mowing vehicle may apply a first model to the work site and set of machine constraints to generate a plurality of tracks through the field for the autonomous mowing machine. A mowing vehicle may apply a second model to the plurality of tracks and the plurality of areas to generate a scheduled order of passes for the autonomous mowing machine. A mowing vehicle may control the autonomous mowing machine to traverse the plurality of passes through the field according to the path schedule.

## Description

### TECHNICAL FIELD

The present disclosure relates generally to systems, methods, and devices for path planning of grass mowing machines wherein the path planning includes skipping one or more passes which are mowed later in the path plan.

### BACKGROUND

Grass mowing machines, or mowers, may be manual and/or autonomous and are used to cut grass, also called turf. The mower may include path planning system(s), method(s), and/or device(s). These may provide the mower and/or user with a path for mowing the turf. A path plan may require the mower to turn. In some situations, the mower may be required to make sharp turns, including but not limited to turns at or near 180 degrees. Sharp turns may take the form of a lightbulb turn or a three-point turn. Both types of turns can be undesirable, for example both can result in damage to the turf. Moreover, turns that require sharp changes in steering angle, including lightbulb and three-point turns, cause more wear to machine components. Grass mowing machines may be used in a variety of applications including, but not limited to, residential mowing, commercial mowing, and/or golf mowing.

### SUMMARY

In some aspects, the techniques described herein relate to a method for determining a path schedule for an autonomous mowing machine to take passes through a field, the method including: accessing a work site data structure representing the field, the work site data structure including polygons representing workable areas and polygons representing unworkable areas; accessing a set of machine constraints for the autonomous mowing machine; applying a first model to the work site data structure and set of machine constraints to generate a plurality of tracks through the field for the autonomous mowing machine, the model configured to: generate a plurality of areas within the work site data structure based on the polygons representing workable areas and polygons representing unworkable areas, for each group, determining a set of tracks that causes the autonomous mowing machine to traverse an entire area represented by the group, and wherein the set of tracks for each group, in aggregate, form the plurality of tracks; applying a second model to the plurality of tracks and the plurality of areas to generate a scheduled order of passes for the autonomous mowing machine, the second model configured to: access path preferences representing how the autonomous mowing machine performs passes in the field; generating a path schedule for the autonomous mowing machine by ordering the plurality of passes according to the accessed path preferences; autonomously controlling the autonomous mowing machine to traverse the plurality of passes through the field according to the path schedule.

In some aspects, the techniques described herein relate to a method, wherein the polygons further include one or more headlands, the headlands defining area accessible to the autonomous mowing machine for performing turns at an end of a pass.

In some aspects, the techniques described herein relate to a method, wherein generating the plurality of areas is further based on at least one of: a shape of a polygon, or adjacency between polygons.

In some aspects, the techniques described herein relate to a method, wherein accessing the work site data structure includes receiving one or more sensor measurements from the autonomous mowing machine during traversal of the field to determine one or more boundary data.

In some aspects, the techniques described herein relate to a method, wherein accessing the work site data structure includes retrieving one or more boundary data from a data storage.

In some aspects, the techniques described herein relate to a method, wherein the set of machine constraints includes a mowing deck size, a turning radius, a traversal speed, or an energy usage.

In some aspects, the techniques described herein relate to a method, wherein the path schedule causes the autonomous mowing machine to navigate traversal of passes within a plurality of groups.

In some aspects, the techniques described herein relate to a method, wherein by ordering the plurality of passes according to the accessed path preferences orders the paths according to a period of traversal.

In some aspects, the techniques described herein relate to a method, wherein by ordering the plurality of passes according to the accessed path preferences orders the paths according to a distance of traversal.

In some aspects, the techniques described herein relate to a method, wherein by ordering the plurality of passes according to the accessed path preferences orders the paths according to an energy usage of traverse.

In some aspects, the techniques described herein relate to a non-transitory computer-readable storage medium storing instructions for determining a path schedule for an autonomous mowing machine to take passes through a field, the instructions, when executed by one or more processors, causing the one or more processors to perform steps including: accessing a work site data structure representing the field, the work site data structure including polygons representing workable areas and polygons representing unworkable areas; accessing a set of machine constraints for the autonomous mowing machine; applying a first model to the work site data structure and set of machine constraints to generate a plurality of tracks through the field for the autonomous mowing machine, the model configured to: generate a plurality of areas within the work site data structure based on the polygons representing workable areas and polygons representing unworkable areas, for each group, determining a set of tracks that causes the autonomous mowing machine to traverse an entire area represented by the group, and wherein the set of tracks for each group, in aggregate, form the plurality of tracks; applying a second model to the plurality of tracks and the plurality of areas to generate a scheduled order of passes for the autonomous mowing machine, the second model configured to: access path preferences representing how the autonomous mowing machine performs passes in the field; generating a path schedule for the autonomous mowing machine by ordering the plurality of passes according to the accessed path preferences; autonomously controlling the autonomous mowing machine to traverse the plurality of passes through the field according to the path schedule.

In some aspects, the techniques described herein relate to a non-transitory computer-readable storage medium, wherein the polygons further include one or more headlands, the headlands defining area accessible to the autonomous mowing machine for performing turns at an end of a pass.

In some aspects, the techniques described herein relate to a non-transitory computer-readable storage medium, wherein generating the plurality of areas is further based on at least one of: a shape of a polygon, or adjacency between polygons.

In some aspects, the techniques described herein relate to a non-transitory computer-readable storage medium, wherein accessing the work site data structure includes receiving one or more sensor measurements from the autonomous mowing machine during traversal of the field to determine one or more boundary data.

In some aspects, the techniques described herein relate to a non-transitory computer-readable storage medium, wherein accessing the work site data structure includes retrieving one or more boundary data from a data storage.

In some aspects, the techniques described herein relate to a non-transitory computer-readable storage medium, wherein the set of machine constraints includes a mowing deck size, a turning radius, a traversal speed, or an energy usage.

In some aspects, the techniques described herein relate to a non-transitory computer-readable storage medium, wherein the path schedule causes the autonomous mowing machine to navigate traversal of passes within a plurality of groups.

In some aspects, the techniques described herein relate to a non-transitory computer-readable storage medium, wherein by ordering the plurality of passes according to the accessed path preferences orders the paths according to a period of traversal.

In some aspects, the techniques described herein relate to a non-transitory computer-readable storage medium, wherein by ordering the plurality of passes according to the accessed path preferences orders the paths according to a distance of traversal.

In some aspects, the techniques described herein relate to an autonomous mowing machine including: an actuation system configured to control traversal of the autonomous mowing machine in a field; one or more processors; and a non-transitory computer-readable storage medium storing instructions for determining a path schedule for an autonomous mowing machine to take passes through the field, the instructions, when executed by one or more processors, causing the one or more processors to perform steps including: accessing a work site data structure representing the field, the work site data structure including polygons representing workable areas and polygons representing unworkable areas; accessing a set of machine constraints for the autonomous mowing machine; applying a first model to the work site data structure and set of machine constraints to generate a plurality of tracks through the field for the autonomous mowing machine, the model configured to: generate a plurality of areas within the work site data structure based on the polygons representing workable areas and polygons representing unworkable areas, for each group, determining a set of tracks that causes the autonomous mowing machine to traverse an entire area represented by the group, and wherein the set of tracks for each group, in aggregate, form the plurality of tracks; applying a second model to the plurality of tracks and the plurality of areas to generate a scheduled order of passes for the autonomous mowing machine, the second model configured to: access path preferences representing how the autonomous mowing machine performs passes in the field; generating a path schedule for the autonomous mowing machine by ordering the plurality of passes according to the accessed path preferences; autonomously controlling the autonomous mowing machine to traverse the plurality of passes through the field according to the path schedule.

### BRIEF DESCRIPTION OF THE DRAWINGS

FIG. 1A illustrates a front perspective view of a mowing vehicle, in accordance with one or more embodiments.
FIG. 1B illustrates a back perspective view of a mowing vehicle, in accordance with one or more embodiments.
FIG. 1C illustrates a plane view of the mowing vehicle, in accordance with one or more embodiments.
FIG. 2 illustrates a block diagram of an implementation of a mowing vehicle, in accordance with one or more embodiments.
FIG. 3 illustrates a block diagram of the system environment for the mowing vehicle, in accordance with one or more embodiments.
FIG. 4 illustrates a block diagram of a path planning module, in accordance with one or more embodiments.
FIG.5 illustrates an exemplary scheduled path generation, in accordance with one or more embodiments.
FIG. 6 illustrates a workflow diagram for determining a path generation for an autonomous mowing machine, in accordance with one or more embodiments.
FIG. 7 illustrates an example computer system, according to an example embodiment.

The figures depict various embodiments for purposes of illustration only. One skilled in the art will readily recognize from the following discussion that alternative embodiments of the structures and methods illustrated herein may be employed without departing from the principles described herein.

### DETAILED DESCRIPTION

### I. Operation Environment

The operating environment may be defined as the area in which the autonomous mowing vehicle traverses while executing mowing operations. The operating environment may include the geometric layout of the worksite, which may be partitioned into zones. These zones may be separated by boundaries or by objects detected within the worksite, such as trees, landscaped features, or other unworkable areas that the mowing vehicle should avoid. In addition to the geometric layout, the operating environment incorporates machine-specific constraints, such as mowing deck size, cutting width, or minimum turning radius, which ensure that any generated path is feasible for the given mowing vehicle. The environment may also reflect operator provided inputs, including pass spacing, mow direction, or zone execution order, which allow the mowing plan to be tailored to operator preferences.

Within this environment, the system generates a path plan. The generated path plan includes schedules of the mowing passes arranged to provide complete coverage of the turf with minimal overlap or omission. The system further determines feasible turning maneuvers such as three-point turns or headland turns, based on the available space and turning radius.

### II. Example Machine Configurations

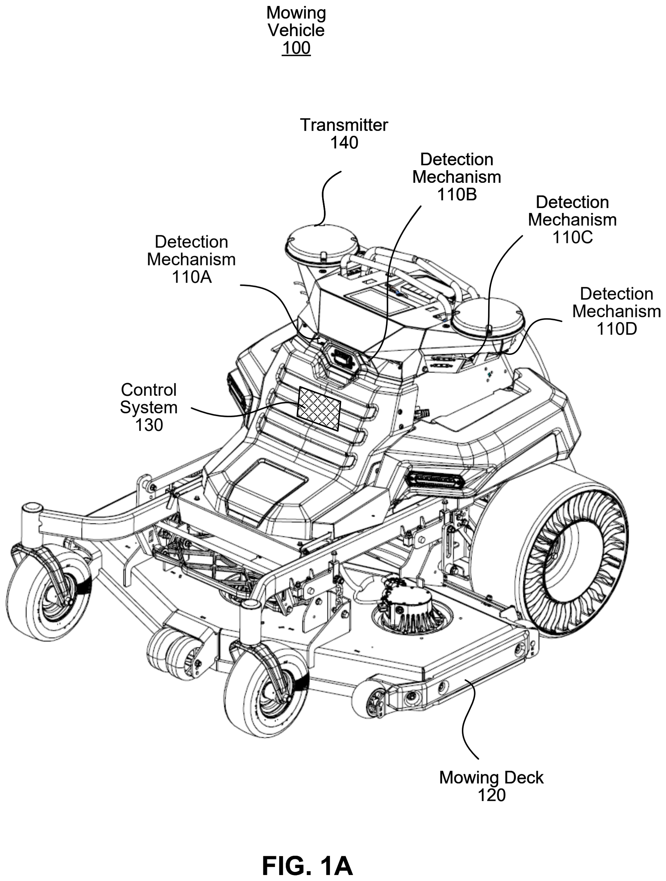

FIGs. 1A-1C illustrate a number of views of an example mowing vehicle 100, in accordance with one or more embodiments. The mowing vehicle 100 is configured for performing a mowing action. The mowing vehicle 100 may operate autonomously, manually, or in a hybrid manner.

FIG. 1A illustrates a front perspective view of the mowing vehicle 100, in accordance with one or more embodiments. The front view illustrates the mowing vehicle 100 including the detection mechanisms 110A, 110B, 110C, and 110D, a mowing deck 120, a control system 130, and a transmitter 140.

The detection mechanisms 110A, 110B, 110C, and 110D may measure or detect information describing the operating environment of the mowing vehicle 100. In one or more embodiments, the detection mechanisms 110 may be cameras, LIDAR sensors, other depth-and-ranging sensors, or some combination thereof. In the embodiment shown, there are two detection mechanisms 110A & 110B (e.g., cameras) oriented forward, along a primary direction of travel. Two detection mechanisms 110C & 110D (e.g., cameras) are oriented towards a left side of the vehicle.

The mowing deck 120 is an embodiment of a landscaping mechanism. In the embodiment shown, the mowing deck 120 is situated towards a bottom of the mowing vehicle 100, proximate to the ground. The mowing deck 120 may include a large shield, under which are one or more motorized blades for mowing plants in the environment. Each of the motorized blades may be individually addressable and operable by the mowing vehicle 100. The mowing deck 120 may be further coupled to a chute that is configured to guide debris ingested by the mowing vehicle 100, i.e., the mowing deck 120, in a particular direction. In some embodiments, a vessel may be implemented and coupled to the chute, such that the vessel is configured to store debris from the mowing vehicle 100 during operation. The motorized blades may further include a braking system for emergent stopping of the blades from spinning.

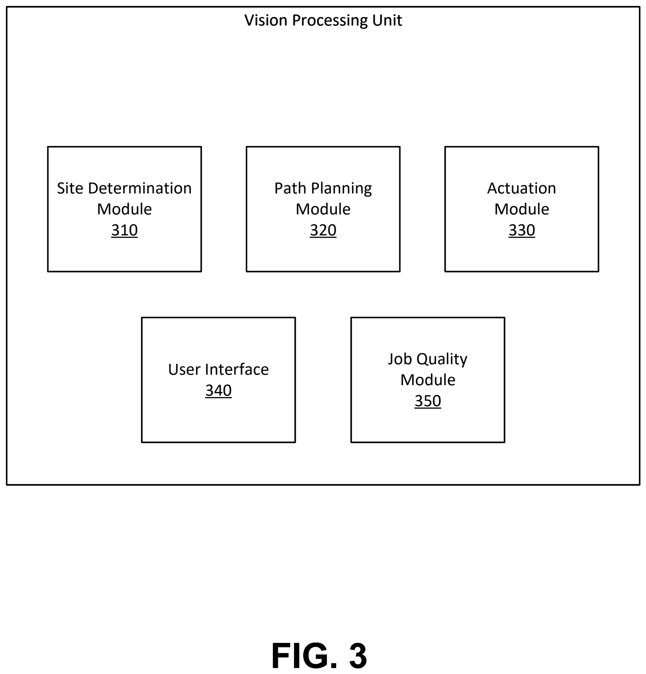

The control system 130 analyses data received by the detection mechanisms 110 and generates control signals for controlling operation of the mowing vehicle 100. In one or more embodiments, the control system is further configured to generate one or more virtual safety bubbles for safe navigation of the mowing vehicle 100. The control system 130 may generate the one or more virtual safety bubbles based on the configuration of the mowing vehicle 100. Generation of the safety bubbles is further described below in FIGs. 3-10. With the safety bubbles, the control system 130 may identify and track objects in the operating environment to determine whether the objects in the operating environment would create a safety concern, e.g., typically if the mowing vehicle 100 and the object are trajected to collide. If the object interacts with the virtual safety bubble, the control system 130 may enact responsive measures to promote safe navigation. Example responsive measures are described below in FIGs. 11-19. The control system 130 can be positioned anywhere on the mowing vehicle 100, e.g., internally, externally, etc.

The transmitter 140 provides for wireless communication with other computing devices or systems, e.g., across a wireless network. The transmitter 140 may be a component of the control system 130. The transmitter 140 may be configured to receive and to transmit communications.

In some embodiments, the mowing vehicle 100 further includes an alert system for generating alerts to caution any passerby in the operating environment. The alert system may include a speaker system for generating audio alerts, one or more light emitters for generating visual alerts, another type of emitter, or some combination thereof.

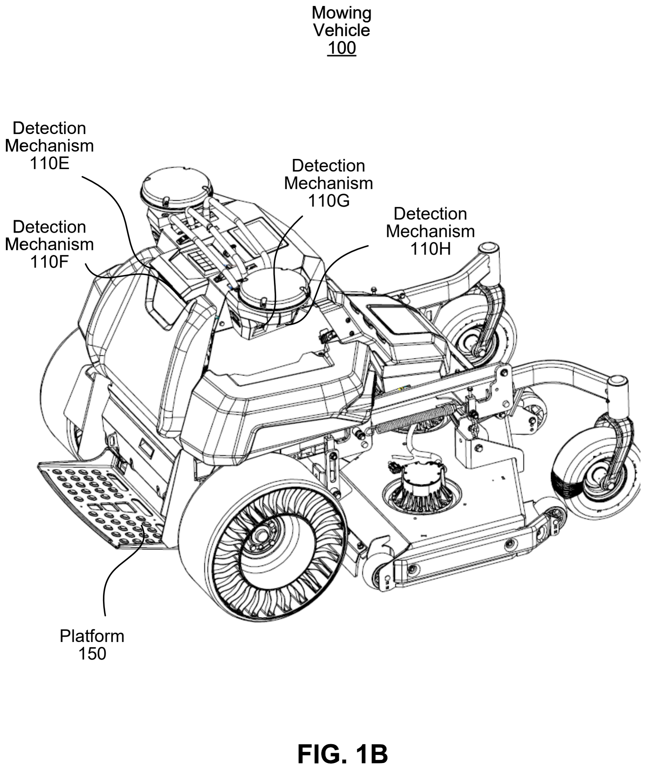

FIG. 1B illustrates a back perspective view of the mowing vehicle 100, in accordance with one or more embodiments. The mowing vehicle 100 may include additional detection mechanisms 110E, 110F, 110G, and 110H. Detection mechanisms 110E & 110F are oriented rearward. Detection mechanisms 110G & 110H are oriented to the right of the vehicle. The mowing vehicle 100 may further include a platform 150 for an operator to ride along and/or to manually operate the mowing vehicle 100.

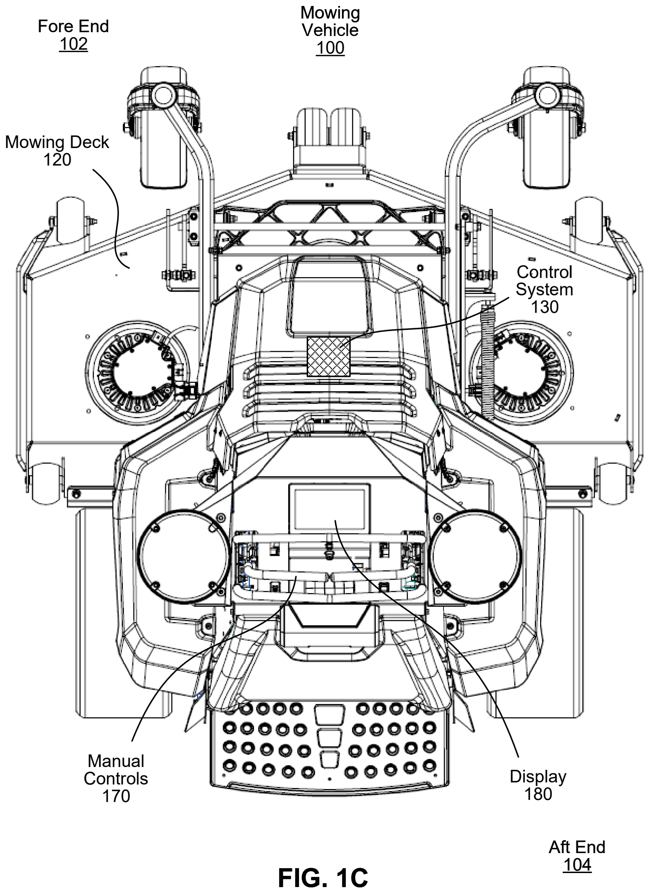

FIG. 1C illustrates a top-down view of the mowing vehicle 100, in accordance with one or more embodiments. The top-down view further illustrates manual controls 170 and a display 180.

The manual controls 170 may include a switch for switching the mowing vehicle 100 from autonomous operation into manual operation, or vice versa. The manual controls 170 may further include other manual inputs for controlling the operation of the mowing vehicle 100, e.g., for navigating the mowing vehicle 100, for activating the mowing deck 120, engaging the alert system, etc.

The display 180 is an electronic display that is configured to provide visual content to the operator. The display 180 may present a state of the mowing vehicle 100. The display 180 may further present a user interface, which may present interactable elements for an operator to further provide manual input in the operation of the mowing vehicle 100.

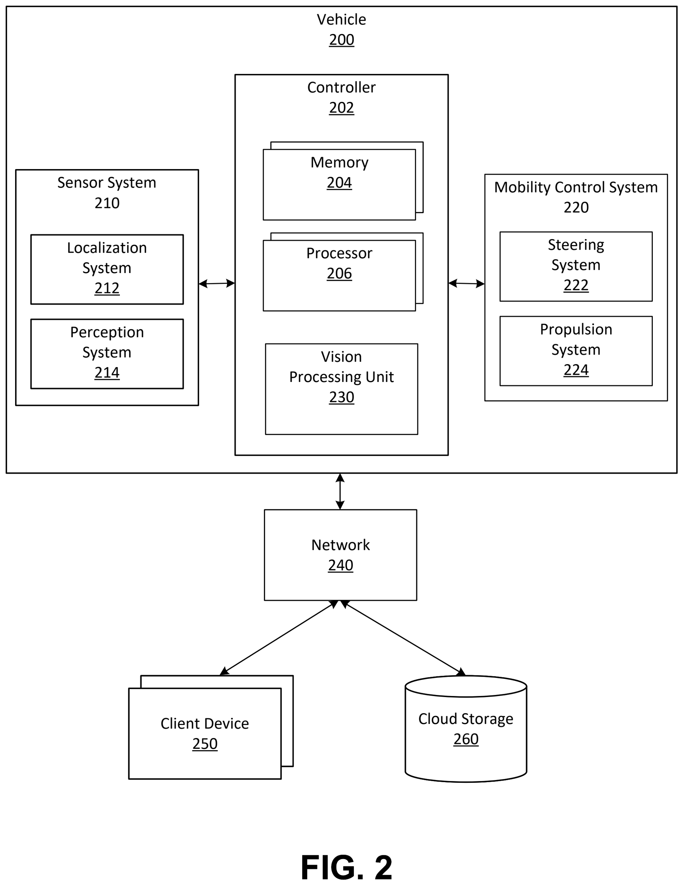

FIG. 2 illustrates an example of an implementation of at least a portion of a vehicle 200 (e.g., mowing vehicle 100). The vehicle 200 may include a controller 202 (e.g., control system 130), which may include at least one memory 204, at least one processor 206 and a vision processing unit 230. The controller 202 may be in communication with a sensor system 210 which may include a localization system 212 and a perception system 214 to receive input from. The localization system 212 may include, but is not limited to, a GPS system. The perception system 214 may classify terrain as turf, sidewalk, landscape, trees, etc.

The sensor system 210 may include one or more detection mechanisms (e.g., detection mechanism 110) configured to capture data representative of the environment surrounding the vehicle 200. In one embodiment, the sensor system 210 may comprise an array of detection mechanisms configured to capture images of the environment, where the image data represents a plurality of objects in proximity to the mowing vehicle. The sensor system 210 may also include cameras or other imaging devices for visual data collection. The sensor system 210 may have a field of view defined by the coverage of its detection mechanisms, and because it may be implemented as an array, the collective fields of view of the individual detection mechanisms may be composited to form a 360-degree coverage area surrounding the vehicle 200. In some configurations, the sensor system 210 may include LIDAR, RADAR, or ultrasonic systems. Overall, the sensor system 210 includes one or more systems capable of detecting objects in the environment around the machine.

Returning again to FIG. 2, also in communication with the controller 202 is a mobility control system 220, which may include a steering system 222 and a propulsion system 224. The steering system 222 may be of any type, including but not limited to Ackerman and differential steering systems, and may control the direction of the mower. The propulsion system 224 may be of any type, including but not limited to gas and/or electric propulsion system. The device may be in communication with one or more client devices 250 and/or the cloud storage 260 via a network 240. For example, cloud storage may be used.

The memory 204 may store data, including but not limited to, localization system data, perception system data, path plans, and all data described herein. The memory 204 may also store instructions to instruct the processor 206 to execute the invention described herein. The controller 202 may command the mower, the mobility control system 220 to take one or more actions. A device of the present invention may include additional or fewer components without departing from the scope of the invention.

The vision processing unit 230 processes input (e.g., sensor data) from various sensors, such as cameras, LIDAR, RADAR, and ultrasonic devices, analyzing the working environment of the mower vehicle. The vision processing unit 230 may detect objects and apply classification models to determine whether they are transient and non-transient objects. The vision processing unit 230 may generate boundaries and develop path planning strategies that allow the mower to efficiently navigate around the working environment. Based on the analysis, the vision processing unit 230 may provide actuation commands to the steering and propulsion systems, ensuring the mower vehicle to accurately operate with various mowing environmental conditions. The vision processing unit 230 may also interact with a user interface to provide feedback and may assess job quality, such as turf health and cut consistency. The models and modules of the vision processing unit will be discussed in further detail in conjunction with FIG. 3.

### Vision Processing Unit

FIG. 3 illustrates a block diagram of the system environment for the mowing vehicle, in accordance with one or more embodiments. The vision processing unit 230 process data from the sensor system 210 and provides actuation commands to the mobility control system 220. The vision processing unit 230 includes a site determination module 310, a path planning module 320, an actuation module 330, a user interface 340 and a job quality module 350. The vision processing unit 230 may include additional or different elements, and the functionality of one element may be provided by a different element.

### Worksite Determination Process

The site determination module 310 generates a representation of the mowing environment that defines the workable and unworkable areas for the mowing vehicle. To do so, the site determination module 310 processes data received from the sensor system 210 or access stored mowing environment image data and/or sensor data to construct a work site representation as a data structure. The data structure may be a collection of polygons generated through the object detection and boundary generation processes. Within the data structure, workable areas are represented as polygons that the vehicle may traverse and perform mowing actions, and unworkable areas are represented as polygons that the vehicle may not traverse to perform mowing actions. Traversable areas may be field, headland, grass, etc., while untraversable areas may be obstacles, landscaped features, restricted zones, etc. Each polygon includes spatial coordinates, boundary edges, and attributes that distinguish between workable and unworkable areas.

The site determination module 310 also incorporates machine constraints into the work site representation to ensure that any generated paths are practical and tailored to the mowing vehicle's operational capabilities. These constraints may include parameters such as the deck size of the mowing vehicle, cutting width, minimum or maximum turning radius, and any physical or operational limitations of the mobility control system 220.

To expand, the machine constraints may represent the mowing implement itself. As noted above, the implement may be a mowing machine, which may include one or more mower decks, reel cutting units, rotary blade assemblies, etc. The implements may be attached in any manner, including but not limited to fixed directly to the mowing vehicle or attached in a removable manner, such as with a towed unit. For instance, a towed unit may include one or more mower decks with rotary cutting blades, allowing the vehicle to expand its effective cutting width. In turn, the machine constraints may include representations of these various aspects of the machine (e.g., width of the deck, speed of the machine and blades, etc.).

In some implementations, the machine constraints may also include default or preloaded parameters of the machine. For example, the constraints may include mower width and length defined by the manufacturer. In other examples, the constraints may include operator adjustable non-fixed parameters, including minimum allowable turn radius (subject to the mower's steering limits), mow direction, pass spacing, or cleanup ordering. These operator-defined parameters may be input through a client device and incorporated into the work site representation.
In some embodiments, the data structure may also include metadata such as object classifications (transient or non-transient), adjacency between polygons, and sensor-derived features. This metadata allows the system to update or refine the work site representation as new data is received during mowing operation. For example, if new obstacles are detected during the mowing operation, the site determination module 310 adds unworkable polygons to incorporate the newly detected obstacles and update the workable polygons accordingly.

### Path Generation

The path planning module 320 includes a track generation model 410 and a pass sequence model 420 to generate a path plan for the mowing vehicle based on the work site representation determined by the site determination module 310. The work site representation provides polygons that define workable and unworkable areas, along with the applicable machine constraints. The tracks determined for each polygonal region are aggregated into a complete set of passes, allowing for all workable zones of the site to be included in the overall path plan.

The track generation model 410 determines the specific paths, or tracks, that cover each polygonal workable area. It lays out mowing passes that achieve complete coverage while respecting the vehicle's operational limits. The track generation model 410 takes as inputs the boundaries, obstacles, and machine constraints provided by the site determination module 310. The boundaries define exterior and interior edges of polygons, while obstacles mark unworkable areas that the vehicle must avoid. The machine constraints, such as deck width, implement configuration, and turning radius, directly shape how tracks can be positioned and connected.

For example, if the mowing width is less than the area width, the track generation model 410 may generate a plurality of adjacent tracks offset by the cutting width to ensure complete coverage. The resulting tracks for each zone are then combined into the aggregated set of passes that form the basis of the path plan.

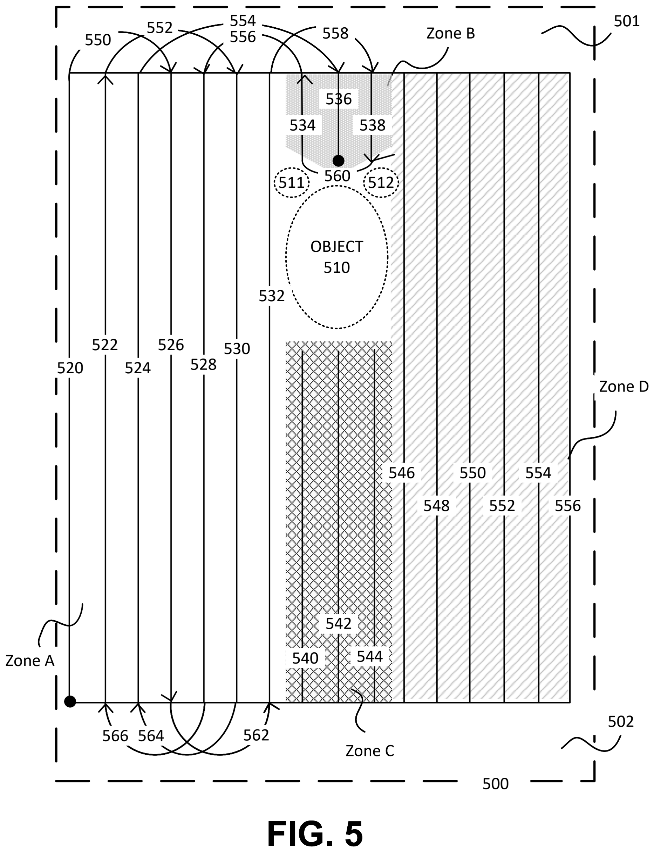

As an example, FIG.5 illustrates an exemplary scheduled path generation, in accordance with one or more embodiments. The illustration includes a representation of the work site (e.g., generated by the site determination module 310). The worksite 500 is a mowing area. The mowing area was divided into multiple zones, such as Zone A, Zone B, Zone C, and Zone D. Within these zones, unworkable areas were also identified. As an example, objects 510, 511, and 512 are outside the workable area are treated as obstacles that the mower must avoid when passing onto the next track at. Additionally, within the representation, the distance between the tracks (e.g., track 520 and 530) is also set to complete the coverage of the turf with minimal overlap or gaps. The aggregated tracks across Zone A to Zone D represent the full set of feasible mowing passes generated by the track generation model 410, which are then provided to the pass sequence model 420 for scheduling into an executable path plan.

In addition, the track generation model 410 uses the vehicle's turning radius and physical dimensions to generate feasible turning maneuvers, such as three-point turns (e.g., Y turn) or headland turns (e.g., wide U turn), at the ends of each track. A three-point turn may operate in a tighter working area while the headland turn may be generated in larger or open areas because they allow smoother transitions, reduce wear on the turf by avoiding abrupt directional changes, and minimize non-productive time at the ends of passes. For example, if the work site is determined to include a 5-meter-wide headland space available beyond the end of a pass, the track generation model 410 may choose a smooth headland turn, whereas if only 2 meters are available, the track generation model 410 may instead generate a three-point turn to safely align with the next track. As shown in FIG. 5, track 538 illustrates a three-point turn where the mower is forced to operate in a constrained area due to the presence of object 510, 511 and 512 requiring multiple forward and reverse maneuvers to realign. By contrast, tracks 550 demonstrates a headland turn performed in a more open space, allowing the mower to sweep smoothly into the next pass without interruption.

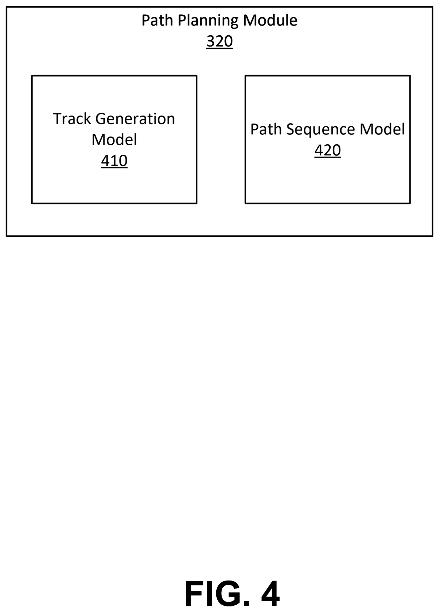

Returning to FIG. 4, the path sequence model 420 determines the path schedule based on the generated tracks from track generation model 410. The path sequence model 420 accesses pass preferences that define how the autonomous mowing machine performs passes within the mowing environment and applies these preferences to order the plurality of tracks into a path schedule. Such preferences may include, for example, minimizing non-productive travel time, reducing turf damage by avoiding sharp consecutive turns, or optimizing fuel usage by reducing the number of acceleration and deceleration.

In one embodiment, the pass sequence model 420 may also incorporate operator-defined parameters or mowing in a particular direction relative to boundaries. The operator of the mowing vehicle may further specify an initial starting zone or an explicit order of zones to be followed. For example, referring to FIG. 5, even if an efficiency-based calculation would suggest proceeding from Zone A to Zone B, the operator may override this preference and instruct the system to proceed from Zone A directly to Zone C. In such cases, the pass sequence model 420 incorporates the operator's decision into the generated schedule, ensuring that the mowing vehicle executes passes in accordance with user-defined priorities while maintaining operational feasibility.

In one embodiment, the pass sequence model 420 may generate a path schedule that executes passes within a single zone at a time, completing all tracks for that zone before transitioning to the next. For example, the mowing vehicle may complete Zone A before moving to Zone B. In another embodiment, the pass sequence model 420 may generate a path schedule that operates across multiple zones in combination, where the passes of two or more zones are interleaved into a single execution sequence. For instance, Zones C and D may be grouped together into a combined mowing schedule, enabling the vehicle to alternate between passes in the two zones if this reduces overall non-productive travel time. The selection between single zone scheduling and multi-zone grouping may depend on operator configuration or may be determined automatically based on efficiency parameters, such as distance between zones, available headland space, or estimated completion time.

In one embodiment, the pass sequence model 420 may implement skip passes, where selected tracks are temporarily bypassed to enable smoother turns, reduce strain on the turf, improve time efficiency, etc. The pass sequence model 420 may further group adjacent passes by partitioning the worksite geometries into smaller regions. Within each group, the model may determine an order by skipping "N" adjacent passes, where "N" is determined by equipment turning capabilities, operator preferences, efficiency criteria, etc. The pass sequence model 420 then recurses back to complete the skipped passes in a systematic pattern, ensuring that all areas are eventually mowed. Once the passes within each group are ordered, the pass sequence model 420 may sequence the groups themselves to minimize non-productive travel, reduce distance and turning effort, or optimize energy usage. The result is a path schedule comprising an ordered list of passes, which may then be autonomously executed by the mowing vehicle.

### Actuation

The actuation module 350 commands the mowing vehicle to operate along the path generated by the path planning module 320. As shown in FIG. 5, the mowing environment 500 includes headlands 501 and 502, which provide maneuvering space at the outer boundary of the worksite. Based on the work site representation generated by the site determination module 310, the plurality of tracks 520, 522, 524 through 556 were grouped into Zones A (track 520 - track 532), Zone B (track 534 - track 538), Zone C (track 540 - track 544), and Zone D (track 546 - track 556). Zones B and Zone C were divided into separate polygons due to the detection of obstacles, including objects 510, 511 and 512, which define unworkable areas within the mowing environment.

Assuming that the path planning module 320 has generated a path optimized for both efficiency and operator preference, the mowing vehicle may proceed through its passes in a specific order, such as 520-550-526-562-532-558-538-560-534-556-528-566-522-552-530-564-554-536. In this example, the operator has further specified that Zones A and B are to be completed prior to Zones C and D, and the schedule reflects this prioritization. The actuation module 350 executes the planned path accordingly, carrying out the required transitions and mowing actions in sequence.

Within Zone B, the transition between track 538 and 560 illustrates a three-point turn. This turning operation is necessary because the presence of objects 510 and 512 restricts the mower's available turning radius, requiring the mowing vehicle to realign using a forward-reverse-forward sequence rather than a smooth sweeping turn. By contrast, in open areas with sufficient headland space, such as at transitions involving path tracks 554 or 536, the mowing vehicle may execute a headland turn, which allows for a wider and smoother U-shaped transition into the next track. Furthermore, the turning transitions at tracks 552 and 554 illustrate cases where a skipped pass strategy may be applied. This approach minimizes sharp consecutive turns, reduces turf damage, and can improve overall time efficiency by aligning the mowing vehicle's turning operations with available headland space or by balancing energy consumption across the mowing task.

In one or more embodiments, the actuation module 350 directly controls the mobility control system 220 (propulsion system 222 and steering systems) of the mowing vehicle to carry out actions in real time. In another embodiment, the actuation module 350 may further enforce operational constraints during execution, such as maintaining a safe distance from additional machines operating in the environment remaining within a defined threshold distance from human crew members or operators, and preserving line-of-sight (LOS) communication with the operator when required. For example, the system may detect the locations of multiple machines operating within the vicinity of the mowing vehicle and adjust its path to prevent interference or collision. Similarly, the positions of operators within the vicinity may be continuously monitored, enabling the actuation module 350 to dynamically apply distance thresholds and ensure safe coexistence between autonomous operations and human activity.

### Interaction with Operators

The user interface module 360 manages components for a graphical representation of the mowing environment that may be interacted with by an operator. It gathers the necessary components for the client device 250 (e.g., planning application),, such as the boundary map, the planned path, labeled objects, and the operational settings of the mowing vehicle. This information may be compiled and transmitted to the client device 250 where it is presented in an interactive format that allows operators to review, adjust, and confirm the mowing vehicle's configuration and operation. The user interface module may transmit data through application programming interfaces (APIs), and may enable real-time communication between the client device 250 and the mowing vehicle. Such operator interactions and updates may further be stored in cloud storage 260 for later use (e.g., maintaining operation logs, supporting job quality analysis, or reusing boundary, and path configurations in subsequent jobs).

In some examples, the user interface module 360 may provide an interface that allows an operator to define an aesthetic appearance of the field (e.g., striping, checkerboard, diamond, circle, etc.). In this case, the user interface module 360 may provide a visualization of the worksite and allow the user to virtually implement various aesthetic parameters for the worksite. For example, the user interface module 360 may generate a graphic showing how a striping pattern would be implemented on the worksite, and may generate a graphic showing how a diamond pattern would look at the worksite, etc.

Once a user has selected an aesthetic appearance for the worksite, the vision processing unit 230 may leverage that selection in generating paths and the corresponding path sequence. For example, if the user selects a striped aesthetic pattern, the vision processing unit may use single skips in a pass sequence such that every other path in the sequence travels the same direction (creating the striped pattern). Again, generating a paths and a pass sequence according to an aesthetic preference may occur within a single zone or across multiple zones.

### Job Quality

The job quality module 350 is configured to determine, monitor, and compensate for the quality of mowing operations performed by the mowing vehicle. The job quality module 350 may receive image and/or sensor data acquired by the sensor system 210 and the mobility control system 220 as the vehicle traverses the mowing environment. In one or more embodiments, the job quality module 350 may monitor the mowing vehicle during operation (e.g., while executing a coverage plan across a turf area) to assess mowing performance and job quality.

When the job quality module 350 detects degrading performance, such as uneven cutting, uncut turf strips, or reduced turf health, it may query other modules (e.g., the path planning module 320 or the actuation module 350) to determine whether the detected issue arises from environmental conditions, transient object interference, or operational parameters of the mowing vehicle. The job quality module 350 may further aggregate relevant data associated with the event, including image data, sensor measurements, machine status, and contextual information, and provide such data for further evaluation and adjustment of mowing operations.

In some embodiments, the job quality module 350 may recommend or initiate compensatory actions to improve job quality. Such actions may include adjusting cutting height, modifying speed, altering mowing patterns, or issuing notifications to the operator through the user interface module 360. Job quality metrics and corrective actions may also be logged in cloud storage 260 for long-term monitoring, performance reporting, and optimization of future mowing operations.

Systems, devices, and methods of the present invention may also be directed to detecting information related to mow quality, analyzing same, generating or updating a path plan based on same, and commanding a mower accordingly. Information related to mow quality may include, but is not limited to: (1) blade speeds detected/measured by encoders; (2) vehicle speeds detected/measured by encoders; (3) blade torque detected/measured with motor current sensing; (4) pre-cut grass height measured/detected one or more of cameras (stereo depth, depth from mono, depth from machine learning, etc.), LIDAR, ultrasonic sensors, and radar. Moreover, pre-cut grass height can be inferred from cut height and torque speed measurements; (5) grass species can be detected using computer vision and machine learning or deep learning; (6) grass thickness/density can be measured using CV/image analysis, machine learning, deep learning, and combinations thereof; (7) grass health can be measured using CV/image analysis, machine learning, deep learning, or combinations thereof. Moreover, cameras could use multispectral imaging and analysis or Near-InfraRed (NIR); (8) blade sharpness can be inferred from combining torque, blade speed, etc; (9) cut height setting can utilize a variety of machine sensors, including encoders, position sensors, etc.; (10) post cut height could be measured behind the machine using the same methods described above for pre-cut height.

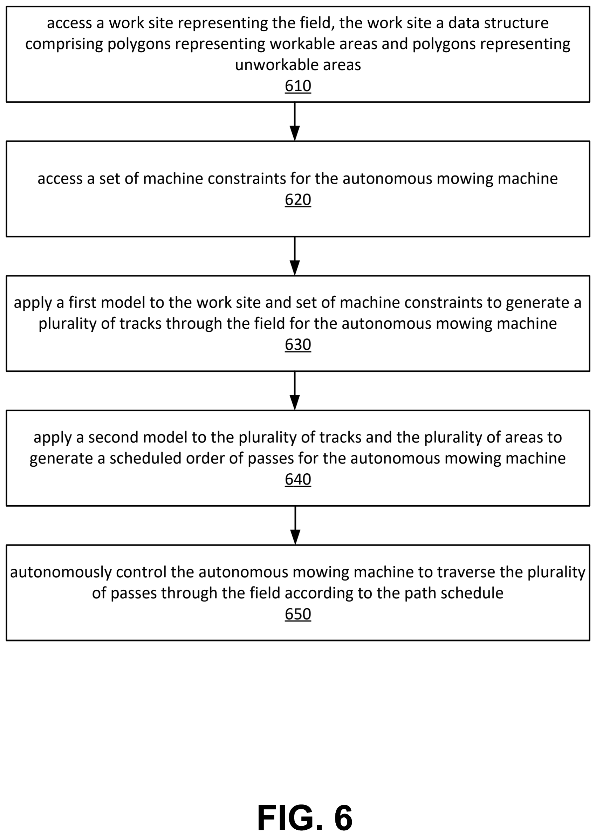

FIG. 6 illustrates a workflow diagram for determining a path generation for an autonomous mowing machine, in accordance with one or more embodiments. In one embodiment, the mowing vehicle 200 accesses 610 a work site representing the field, the work site a data structure comprising polygons representing workable areas and polygons representing unworkable areas. The mowing vehicle 200 accesses 620 a set of machine constraints for the autonomous mowing machine. The mowing vehicle 200 applies 630 a first model to the work site and set of machine constraints to generate a plurality of tracks through the field for the autonomous mowing machine. The mowing vehicle 200 applies 640 a second model to the plurality of tracks and the plurality of areas to generate a scheduled order of passes for the autonomous mowing machine. The mowing vehicle 200 autonomously controls 650 the autonomous mowing machine to traverse the plurality of passes through the field according to the path schedule.

### III. Example Computing System

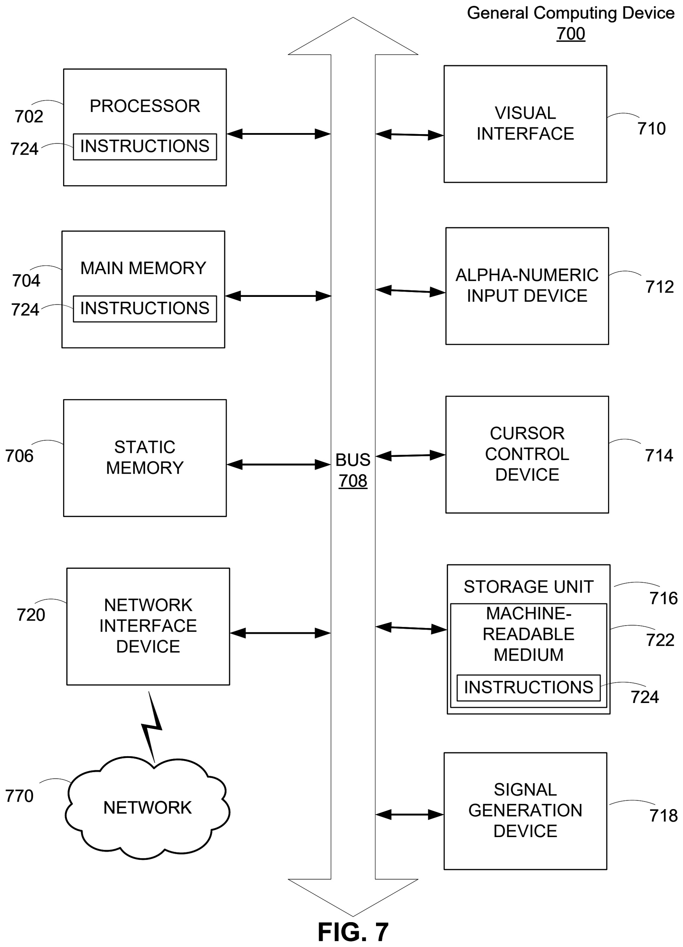

FIG. 7 illustrates an example computer system, according to an example embodiment. The machine may be, or may include a server computer, a client computer, a personal computer (PC), a tablet PC, a set-top box (STB), a personal digital assistant (PDA), a cellular telephone, a smartphone, a web appliance, a network router, switch or bridge, or any machine capable of executing instructions 724 (sequential or otherwise) that specify actions to be taken by that machine. Further, while only a single machine is illustrated, the term "machine" shall also be taken to include any collection of machines that individually or jointly execute instructions 724 to perform any one or more of the methodologies discussed herein.

The example computer system 700 includes a processor 702 (e.g., a central processing unit (CPU), a graphics processing unit (GPU), a digital signal processor (DSP), one or more application specific integrated circuits (ASICs), one or more radio-frequency integrated circuits (RFICs), or any combination of these), a main memory 704, and a static memory 706, which are configured to communicate with each other via a bus 708. The computer system 700 may further include visual display interface 710. The visual interface may include a software driver that enables displaying user interfaces on a screen (or display). The visual interface may display user interfaces directly (e.g., on the screen) or indirectly on a surface, window, or the like (e.g., via a visual projection unit). For ease of discussion the visual interface may be described as a screen. The visual interface 710 may include or may interface with a touch enabled screen. The computer system 700 may also include alphanumeric input device 712 (e.g., a keyboard or touch screen keyboard), a cursor control device 714 (e.g., a mouse, a trackball, a joystick, a motion sensor, or other pointing instrument), a storage unit 716, a signal generation device 718 (e.g., a speaker), and a network interface device 720, which also are configured to communicate via the bus 708.

The storage unit 716 includes a machine-readable medium 722 on which is stored instructions 724 (e.g., software) embodying any one or more of the methodologies or functions described herein. The instructions 724 (e.g., software) may also reside, completely or at least partially, within the main memory 704 or within the processor 702 (e.g., within a processor's cache memory) during execution thereof by the computer system 700, the main memory 704 and the processor 702 also constituting machine-readable media. The instructions 724 (e.g., software) may be transmitted or received over a network 240 via the network interface device 720.

While machine-readable medium 722 is shown in an example embodiment to be a single medium, the term "machine-readable medium" should be taken to include a single medium or multiple media (e.g., a centralized or distributed database, or associated caches and servers) able to store instructions (e.g., instructions 724). The term "machine-readable medium" shall also be taken to include any medium that is capable of storing instructions (e.g., instructions 924) for execution by the machine and that cause the machine to perform any one or more of the methodologies disclosed herein. The term "machine-readable medium" includes, but not be limited to, data repositories in the form of solid-state memories, optical media, and magnetic media.

### IV. Additional Considerations

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute either software modules (e.g., code embodied on a machine-readable medium or in a transmission signal) or hardware modules. A hardware module is tangible unit capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a landscaping environment programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses) that connect the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or processors or processor-implemented hardware modules. The performance of certain of the operations may be distributed among the one or more processors, not only residing within a single machine, but deployed across one or more machines, e.g., computer system 700. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., application program interfaces (APIs).)

The performance of certain of the operations may be distributed among the one or more processors, not only residing within a single machine, but deployed across a number of machines. It should be noted that where an operation is described as performed by "a processor," this should be construed to also include the process being performed by more than one processor. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Some portions of this specification are presented in terms of algorithms or symbolic representations of operations on data stored as bits or binary digital signals within a machine memory (e.g., a computer memory). These algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. It should be understood that these terms are not intended as synonyms for each other. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

Upon reading this disclosure, those of skill in the art will appreciate still additional alternative structural and functional designs for a system and a process for providing CMC change assessment through the disclosed principles herein. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the disclosed principles.

## Claims

1. A method for determining a path schedule for an autonomous mowing machine to take passes through a field, the method comprising:
accessing a work site data structure representing the field, the work site data structure comprising polygons representing workable areas and polygons representing unworkable areas;
accessing a set of machine constraints for the autonomous mowing machine;
applying a first model to the work site data structure and set of machine constraints to generate a plurality of tracks through the field for the autonomous mowing machine, the model configured to:
generate a plurality of areas within the work site data structure based on the polygons representing workable areas and polygons representing unworkable areas,
for each group, determining a set of tracks that causes the autonomous mowing machine to traverse an entire area represented by the group, and
wherein the set of tracks for each group, in aggregate, form the plurality of tracks;
applying a second model to the plurality of tracks and the plurality of areas to generate a scheduled order of passes for the autonomous mowing machine, the second model configured to:
access path preferences representing how the autonomous mowing machine performs passes in the field;
generating a path schedule for the autonomous mowing machine by ordering the plurality of passes according to the accessed path preferences;
autonomously controlling the autonomous mowing machine to traverse the plurality of passes through the field according to the path schedule.

2. The method of claim 1, wherein the polygons further include one or more headlands, the headlands defining area accessible to the autonomous mowing machine for performing turns at an end of a pass.

3. The method of claim 1 or claim 2, wherein generating the plurality of areas is further based on at least one of: a shape of a polygon, or adjacency between polygons.

4. The method of any one of the preceding claims, wherein accessing the work site data structure includes receiving one or more sensor measurements from the autonomous mowing machine during traversal of the field to determine one or more boundary data.

5. The method of any one of the preceding claims, wherein accessing the work site data structure includes retrieving one or more boundary data from a data storage.

6. The method of any one of the preceding claims, wherein the set of machine constraints includes a mowing deck size, a turning radius, a traversal speed, or an energy usage.

7. The method of any one of the preceding claims, wherein the path schedule causes the autonomous mowing machine to navigate traversal of passes within a plurality of groups.

8. The method of any one of the preceding claims, wherein by ordering the plurality of passes according to the accessed path preferences orders the paths according to a period of traversal.

9. The method of any one of the preceding claims, wherein by ordering the plurality of passes according to the accessed path preferences orders the paths according to a distance of traversal.

10. The method of any one of the preceding claims , wherein by ordering the plurality of passes according to the accessed path preferences orders the paths according to an energy usage of traverse.

11. A non-transitory computer-readable storage medium storing instructions for determining a path schedule for an autonomous mowing machine to take passes through a field, the instructions, when executed by one or more processors, causing the one or more processors to perform the method of any one of the preceding claims.

12. An autonomous mowing machine comprising:
an actuation system configured to control traversal of the autonomous mowing machine in a field;
one or more processors; and
a non-transitory computer-readable storage medium storing instructions for determining a path schedule for an autonomous mowing machine to take passes through the field, the instructions, when executed by one or more processors, causing the one or more processors to perform steps comprising:
accessing a work site data structure representing the field, the work site data structure comprising polygons representing workable areas and polygons representing unworkable areas;
accessing a set of machine constraints for the autonomous mowing machine;
applying a first model to the work site data structure and set of machine constraints to generate a plurality of tracks through the field for the autonomous mowing machine, the model configured to:
generate a plurality of areas within the work site data structure based on the polygons representing workable areas and polygons representing unworkable areas,
for each group, determining a set of tracks that causes the autonomous mowing machine to traverse an entire area represented by the group, and
wherein the set of tracks for each group, in aggregate, form the plurality of tracks;
applying a second model to the plurality of tracks and the plurality of areas to generate a scheduled order of passes for the autonomous mowing machine, the second model configured to:
access path preferences representing how the autonomous mowing machine performs passes in the field;
generating a path schedule for the autonomous mowing machine by ordering the plurality of passes according to the accessed path preferences;
autonomously controlling the autonomous mowing machine to traverse the plurality of passes through the field according to the path schedule.
